(19) **Europäisches Patentamt**

**European Patent Office**

**Office européen des brevets**

(11) **EP 1 451 243 B1**

(12) **FASCICULE DE BREVET EUROPEEN**

(45) Date de publication et mention
de la délivrance du brevet:
**10.05.2006 Bulletin 2006/19**

(51) Int Cl.:
*C08J 3/12* (2006.01)    *C11D 17/00* (2006.01)
*C11D 3/50* (2006.01)    *C08L 3/02* (2006.01)
*C08L 5/16* (2006.01)

(21) Numéro de dépôt: **02803446.0**

(22) Date de dépôt: **20.11.2002**

(86) Numéro de dépôt international:
**PCT/FR2002/003969**

(87) Numéro de publication internationale:
**WO 2003/044081 (30.05.2003 Gazette 2003/22)**

(54) **COMPOSITION GRANULEE A BASE DE MATIERE AMYLACEE ET SON UTILISATION DANS LES DOMAINES NON ALIMENTAIRES ET NON PHARMACEUTIQUES**

GRANULIERTE ZUSAMMENSETZUNG AUF BASIS VON STÄRKEARTIGER SUBSTANZ UND NICHT IM BEREICH LEBENSMITTEL ODER PHARMAZIE LIEGENDE VERWENDUNG DAVON

GRANULATED COMPOSITION BASED ON STARCHY SUBSTANCE AND NON-FOOD AND NON-PHARMACEUTICAL USE THEREOF

(84) Etats contractants désignés:
**AT BE BG CH CY CZ DE DK EE ES FI FR GB GR IE IT LI LU MC NL PT SE SK TR**

(30) Priorité: **23.11.2001 FR 0115235**

(43) Date de publication de la demande:
**01.09.2004 Bulletin 2004/36**

(73) Titulaire: **Roquette Frères**
**62136 Lestrem (FR)**

(72) Inventeurs:
• **MENTINK, Léon**
**F-59100 Roubaix (FR)**
• **BERNAERTS, Joel**
**F-62122 Labeuvrière (FR)**

(74) Mandataire: **Boulinguiez, Didier**
**Cabinet Plasseraud**
**65/67 rue de la Victoire**
**75440 Paris Cedex 09 (FR)**

(56) Documents cités:
EP-A- 0 428 427    EP-A- 1 072 612
WO-A-99/55819    DE-A- 19 850 087
FR-A- 2 005 448    FR-A- 2 015 683

• PATENT ABSTRACTS OF JAPAN vol. 15, no. 56 (C-804), 8 février 1991 (1991-02-08) & JP 02 286067 A (MEIJI MILK PROD CO LTD), 26 novembre 1990 (1990-11-26) & DATABASE WPI Week 199102 Derwent Publications Ltd., London, GB; AN 1991-012207
• VISAVARUNGROJ N ET AL: "CROSSLINKED STARCH AS BINDING AGENT I. CONVENTIONAL WET GRANULATION" INTERNATIONAL JOURNAL OF PHARMACEUTICS, AMSTERDAM, NL, vol. 59, no. 1, 28 février 1990 (1990-02-28), pages 73-78, XP000971702 ISSN: 0378-5173

**Description**

La présente invention a pour objet une nouvelle composition granulée à base de matière amylacée, particulièrement adaptée à la préparation de produits à usage non alimentaire et non pharmaceutique tels que les détergents ou les adhésifs.

Elle vise également l'utilisation d'une matière amylacée sélectionnée dans le but de la préparation de tels produits selon un procédé comportant une étape de granulation humide.

L'invention concerne enfin, l'utilisation de ladite matière amylacée sélectionnée en vue de fournir une nouvelle composition multifonctionnelle, par exemple utile comme absorbant, désintégrant, liant, adhésif, piégeur d'odeurs et/ou support de principe actif, utile à la préparation de tels produits.

Par « composition granulée » au sens de la présente invention, on entend en particulier toute composition, intermédiaire ou finale, qu'elles qu'en soient notamment l'origine, la nature, les constituants, la ou les fonctionnalité(s) et destination(s) se présentant sous forme de particules de toutes granulométries, s'écoulant généralement librement et obtenue selon un procédé contenant au moins une étape de granulation par voie humide, ladite étape ayant pu par ailleurs avoir été précédée ou suivie par au moins une étape choisie notamment dans le groupe comprenant les traitements de mélange à sec, hydratation, séchage, compactage, densification, broyage, tamisage, sphéronisation, enrobage et pelliculage.

Par « granulation par voie humide », on entend toute technique connue de granulation effectuée en présence d'eau, de vapeur d'eau, et/ou de toute autre phase liquide ou liquéfiée. Ces techniques impliquent classiquement une étape de mélange des différents constituants de la composition à granuler, menée à température entre 15 et 35°C, et notamment à température ambiante, et à pression peu élevée, généralement à pression atmosphérique.

Elles peuvent notamment être opérées sur des dispositifs de type granulateur, mélangeur-granulateur, sphéroniseur, granulateur-sphéroniseur, granulateur à lit ou tambour fluidisé, granulateur-enrobeur ✳., tels que ceux commercialisés par les Sociétés GLATT, LODIGE, LIST, HOSOKAWA SHUGI, NARA MACHINERY, FREWITT, FORBERG, KALTENBACH-THURING, APV ou ROMACO.

L'eau de granulation peut également être introduite sous forme de glace comme décrit dans le brevet EP 428 427 relatif à un procédé de granulation par voie humide de polysaccharides additifs alimentaires, pharmaceutiques ou techniques. D'aprés les exemples de ce document, lesdits polysaccharides consistent avantageusement en des matières non amylacées telles que xanthane, guar pectine ou gomme arabique. La seule matière amylacée envisagée, en association avec de la gomme arabique au sein d'une composition aromatique, consiste en une maltodextrine, sans qu'aucune précision ne soit donnée quant à la nature exacte de cette maltodextrine et quant aux caractéristiques exactes de solubilité et de diamètre moyen de la composition aromatique résultante.

Les techniques de granulation humide se distinguent principalement des procédés dans lesquels les matières premières, généralement sous forme de poudres, sont simplement mélangées physiquement, puis éventuellement compactées ou pelletisées, sans mise en ✳uvre d'étape, d'adjuvant ou de dispositif, permettant à ce mélange d'être granulé, pour le moins d'être réparti de manière relativement homogène au sein de ses particules constitutives.

Elles se distinguent également des techniques de cuisson à la vapeur ou sur tambour sécheur, d'extrusion ou d'atomisation en tant que telles, dans lesquelles le mélange est, avant et/ou pendant sa mise en forme, soumis à des gammes élevées de température et/ou de pression.

Ainsi, à titre d'exemple, le Brevet WO 99/55819 décrit la préparation, par atomisation à 205-210°C, ,de particules de parfums encapsulés dans une matière à base d'amidon modifié. Aucune précision n'est donnée ou ne peut être déduire quant au diamètre moyen des particules résultantes. On observe cependant une forte proportion (16% en poids) de fines particules de taille inférieure à $50 \mu m$ et une trés faible proportion (1% en poids) de particules de tailles superieure à $500 \mu m$.

Les techniques de granulation humide se distinguent par ailleurs fondamentalement des techniques de dragéification par lesquelles on pulvérise un liquide, de façon répétée, sur un lit de particules chauffé et mis en mouvement et ce, en vue d'obtenir des particules caractérisées par une forme sphérique et une structure dite « en pelure d'oignon ».

Dans ces techniques, le liquide de dragéification doit présenter une matière sèche pas trop élevée, généralement inférieure à 40 %, pour être facilement pulvérisable, ce qui implique que l'eau apportée par ce liquide soit rapidement et constamment enlevée par séchage aux fins d'éviter que la composition devienne collante et hétérogène en cours de dragéification.

De telles techniques sont décrites, par exemple, dans le brevet EP 1 072 612 qui vise l'obtention de particules substantiellement sphériques, de structure « en pelure d'oignon », et constituées à 100% d'amidons par créations successives et séchages successifs de couches superposées contenant simultanément de l'amidon natif granulaire et de l'amidon prégélatinisé et recouvrant des noyaux (« seeds » ou « base products ») constitués totalement ou très majoritairement d'amidon natif granulaire.

Il est fait couramment appel à des mélanges d'additifs sous forme particulaire pour la préparation de produits finis, liquides ou solides, à usage non alimentaire ou non pharmaceutique.

Chacun de ces additifs peut présenter une fonctionnalité unique, pour le moins primordiale, ou une pluralité de fonctionnalités en regard des conditions de préparation, des conditions d'utilisation et des propriétés recherchées du produit fini.

A titre illustratif, il a été proposé de préparer, selon un procédé incluant ou non une étape de granulation par voie humide, des additifs particulaires pour compositions détergentes dont la fonctionnalité prioritairement recherchée était d'agir :

- en tant que builder ou co-builder à base de zéolithes comme décrit, par exemple, dans les brevets EP 455.522 et EP 511.081 au nom de la Demanderesse,
- en tant qu'agent désintégrant comme décrit, par exemple, dans les brevets WO 98/40462, WO 99/64555, CA 2,317,030 ou DE 199 530 27,
- en tant qu'agent de support de tensio-actifs ou d'antimousses comme décrit, par exemple, dans les brevets EP 496.510, CA 2,300,638, CA 2,316,591 ou WO 01/34756.
- en tant qu'agent de support d'activateurs de blanchiment comme décrit, par exemple, dans les brevets US 4,372,868, US 4,695,397 et US 5,433,881,
- en tant qu'agent de support de parfums comme décrit, par exemple, dans le brevet WO 99/45091.

A titre egalement illustratif, il a été proposé dans le brevet FR 200544 de préparer une composition pesticide granulaire renfermant de 2 à 95% en poids d'un ingrédient actif biologiquement réparti intimement et uniformement dans une matrice comprenant de 1 à 45% d'un amidon ou d'un de ses dérivés d'hydrolyse finement divisé, comme agent liant. Les auteurs préconisent dependant que l'amidon ou son dénsité d'hydrolyse represente au maximum 35% en poids de ladite composition. Dans la pratique et dans les nombreux exemples de ce brevet, les composition presticides granulaires contiennent moins de 10% en poids d'amidon natif, notamment de maïs et/ou d'un produit d'hydrolise de celui-ci, ce dernier consistant avantageusement en dextiose, sorbitol ou dextiene de maïs, i.e en des produits de trés pertes solubilités dans l'eau.

Dans tous les cas, il est souhaité que l'additif particulaire, obtenu ou non par granulation humide, présente simultanément :

a) une bonne aptitude à l'écoulement en vue des opérations de stockage, transport, dosage et mélange devant mener au produit fini,
b) une granulométrie suffisamment élevée pour être adaptée aux dites opérations et en outre limiter les risques d'explosivité ou d'inhalation de poussières,
c) une bonne résistance à l'abrasion lors desdites opérations et en particulier une faible propension à générer de fines particules et ce, pour des raisons de sécurité et de productivité,
d) une densité adaptée aux dites opérations et si possible aux nouvelles contraintes liées à la protection de l'environnement visant une densification des produits finis en vue de limiter le volume des emballages et le coût du transport,
e) une aptitude à être dispersé et/ou solubilisé de manière homogène et, si possible, contrôlée dans le produit fini puis dans le milieu d'application, y compris 1) dans une eau ou une colle dont la température est peu élevée ou 2) à la surface d'un sol ou d'un végétal,
f) une bonne aptitude à la compression dans le cas où ledit additif est incorporé, en mélange ou non avec d'autres additifs particulaires, dans une composition finale devant être compactée ou comprimée,
g) une bonne aptitude à agir comme agent vecteur, notamment à propriétés absorbantes, dispersantes et/ou protectrices, de tout principe actif qu'il contient,
h) une très bonne biodégradabilité, notamment en regard des réglementations toujours plus contraignantes liées à la protection de l'environnement,
i) une coloration la moins marquée possible tel que souhaité, par exemple, par les fabricants de compositions détergentes ou de colles alcalines et, en amont, par leur fournisseurs d'additifs, l'ensemble de ces industriels recherchant en général un haut degré de blancheur pour ces produits finis ou semi-finis, et,
j) un prix de revient le moins élevé possible.

En outre, dans le cas de produits finis à usage non alimentaire ou non pharmaceutique tels que des détergents, des colles, des produits phytosanitaires ou des engrais, il est souvent souhaité que les additifs utilisés pour la préparation desdits produits finis ainsi que lesdits produits finis, soient efficacement utilisables dans des conditions alcalines et notamment dans des milieux applicatifs dont le pH se situe entre 7 et 13 environ et tout particulièrement entre pH 8 et 11 environ. Dans certains cas il est requis, inversement, que cette efficacité puisse s'exprimer dans une gamme de pH (très) peu élevés. C'est par exemple le cas pour les tablettes antitartre présentant un pH de 1 à 5 comme décrit dans le brevet WO 01/62886.

Il en résulte que les composants desdits additifs, quelles que soient leurs nature et fonctionnalité(s), doivent en outre être adaptés à de telles conditions de pH et notamment permettre à l'additif et au produit fini le contenant de présenter ou conserver les caractéristiques recherchées d'efficacité, de résistance à l'abrasion et de dureté, de solubilité et de dispersibilité dans l'eau, de biodégradabilité, de couleur, ⁂ ⦙

Il est connu que les produits alcalins contenus dans les compositions lessivielles ont notamment pour effet d'augmenter la dégradation et la sensibilité à l'hydrolyse de principes actifs tels que les parfums ou les activateurs de blanchiment. C'est pourquoi il a été préconisé dans le brevet US 4,695,397, de préparer des particules d'additif de détergence en absence d'eau ou de phase liquide et ce, par simple compactage puis broyage d'un mélange physique associant l'activateur de blanchiment, de l'amidon de maïs et du tripolyphosphate de sodium.

Il est également connu que les conditions de pH influencent très largement les propriétés, par exemple de gonflement, de solubilité, de gélification, de dispersibilité et de réactivité dans l'eau, de produits polymériques d'origine naturelle ou synthétique utilisés classiquement dans la préparation de compositions à usage non alimentaire et non pharmaceutique.

C'est notamment le cas pour des polymères d'origine naturelle tels que les amidons, les celluloses et leurs dérivés respectifs ou des polymères d'origine synthétique tels que les polyvinyl pyrrolidones (ci-après collectivement « PVP »), les (co) polymères d'acide (méth) acrylique et leurs sels (ci-après collectivement « polyacrylates ») ou les polyéthylène glycols (ci-après collectivement « PEG »).

Les amidons granulaires sont tout particulièrement sensibles aux pH alcalins qui en augmentent significativement la solubilité et la viscosité, notamment en milieu aqueux.

Dans ces conditions, les amidons ne peuvent généralement pas gonfler au contact de l'eau sans développer un fort pouvoir collant. Ce pouvoir collant est particulièrement défavorable lorsqu'un amidon est utilisé dans des systèmes devant, par exemple, favoriser en milieu aqueux la dispersion de principes actifs et/ou la désintégration de comprimés ou tablettes. En outre, la présence significative de sucres réducteurs dans de nombreux dérivés d'amidon est susceptible, en milieu alcalin, de générer des problèmes de coloration au sein de toute composition contenant de tels dérivés.

Inversement, dans des conditions de pH acide, les amidons subissent facilement un phénomène d'hydrolyse générant des sucres réducteurs et de petites molécules et qui a pour effets d'augmenter l'hygroscopicité et de diminuer le pouvoir liant de la composition amylacée résultante.

Enfin, la granulométrie moyenne des poudres amylacées, y inclus des poudres d'amidons natifs ou d'amidons préalablement traités thermiquement par cuisson à la vapeur, cuisson sur tambour sécheur ou atomisation, est le plus souvent très fine et significativement inférieure à 200 microns (μm), ce qui peut générer des problèmes d'hétérogénéité à l'état sec ou en milieu aqueux, ou de ségrégation particulaire lors des opérations de mélange avec des poudres d'autres additifs en vue de la préparation de produits finis solides ou liquides.

Ces problèmes se rencontrent également avec les celluloses et dérivés, dont les celluloses microcristallines, qui présentent généralement une granulométrie moyenne très inférieure à 200 μm.

En outre et comme décrit dans le brevet WO 98/40462 précité, les celluloses présentent généralement une densité très faible et doivent être compactées en vue de leur utilisation, notamment comme agents désintégrants de comprimés détergents.

Malgré ces inconvénients et malgré 1) une biodégradabilité généralement moindre et/ou plus lente et 2) un prix de revient généralement supérieur, en regard des amidons correspondants, force est de constater que les celluloses sont des polymères d'origine naturelle qui, dans la pratique industrielle, sont beaucoup plus couramment et abondamment utilisées que les amidons dans les produits finis tels que les colles en poudres ou les tablettes détergentes.

Ceci est dû, en grande partie, aux inconvénients précités liés à l'usage d'amidons et dérivés dans des milieux présentant des pH alcalins ou inversement des pH acides, lesdits inconvénients ayant pour effet d'amener l'homme du métier à écarter ou limiter en pratique un tel usage au profit des celluloses et/ou de polymères synthétiques tels que ceux précités, de prix de revient pourtant supérieurs et de moindre biodégradabilité.

Il résulte de ce qui précède qu'il existait un besoin de disposer d'un moyen qui permette d'être avantageusement utilisable dans le cadre général de la préparation de produits non alimentaires et non pharmaceutiques et notamment d'un moyen qui :

    1) présente le maximum des caractéristiques a) à j) précitées et notamment des caractéristiques physiques, une biodégradabilité et un prix de revient adaptés aux exigences techniques, économiques et réglementaires actuelles,
    2) soit utilisable pour le maximum de fonctionnalités recherchées dans le domaine de la fabrication de produits intermédiaires ou finis, solides ou liquides, à usage non alimentaire ou non pharmaceutique,
    3) soit utilisable pour le maximum de principes actifs

    mis en œuvre dans ce domaine, et notamment,
    4) soit efficace dans des milieux pouvant présenter des valeurs de pH éloignées de la neutralité, en particulier des pH (très) alcalins.

A fortiori, il n'existait pas à ce jour un moyen tel que décrit ci-avant et qui puisse en outre, si on le souhaite, être utilisé en tant que tel comme produit fini, par exemple comme poudre de détergent, d'adhésif, de produit phytosanitaire ou d'engrais.

Et la Société Demanderesse a trouvé qu'un tel moyen pouvait consister en une composition particulière sélectionnée notamment 1) par sa forme de présentation, en l'occurrence sous forme granulée par voie humide et de granulométrie moyenne suffisante, 2) son niveau de solubilité dans l'eau dans des conditions de test définies, et 3) sa composition, en particulier sa richesse en matière amylacée.

De façon plus précise, la présente invention a pour objet une composition granulée par voie humide utile à la préparation de produits à usage non alimentaire et non pharmaceutique, caractérisée en ce qu'elle présente :

a) un indice de solubilité en milieu alcalin ou indice SMA, compris entre 1,0 et 25 g/l, de préférence compris entre 1,2 et 25 g/l,

b) une teneur en matière amylacée d'au moins 40 % exprimée en poids sec de matière amylacée par rapport au poids sec de ladite composition, et

c) un diamètre moyen de ses particules supérieur à 200 microns, de préférence supérieur à 250 microns.

L'une des caractéristiques essentielles de la composition selon l'invention est de se présenter sous forme granulée par voie humide conformément à la définition qui a été donnée précédemment et qui exclut en particulier que ladite composition ne soit qu'un simple mélange physique de ses constituants comme il sera exemplifié par ailleurs ou qu'elle se présente sous forme de granules sphériques à structure en « pelure d'oignon » tels qu'obtenus par dragéification.

En outre, conformément à la présente invention, le diamètre moyen des particules de ladite composition est supérieur à 200 microns, i.e. supérieur notamment à la taille maximum de la plupart des matières premières, polymériques ou non, utilisées en pratique dans le cadre de la fabrication de produits à usage non alimentaire et non pharmaceutique. Le diamètre moyen est mesuré sur un granulomètre à diffraction laser de type LS 230 de BECKMAN COULTER®, en voie sèche. En l'occurrence, le diamètre moyen ici mesuré correspond à la nomenclature D 4,3 (« volume-weighted mean diameter ») telle que décrite dans l'article de M. ALDERLIESTEN publié dans Part. Part. Syst. Charact. 8 (1991), pp 237-241.

L'une des caractéristiques essentielles de l'invention concerne l'indice de solubilité en milieu alcalin ou « indice SMA » de ladite composition granulée, ledit indice étant sélectionné dans une gamme particulière, à savoir entre 1,0 et 25 g/l, de préférence entre 1,2 et 25 g/l.

Ledit indice est mesuré de la façon décrite ci-après :

Dans 1 litre d'eau déminéralisée maintenue à 20°C, on introduit sous agitation 0,1 % en poids de métasilicate de sodium pentahydrate, de façon à préparer un milieu aqueux présentant un pH de 11 environ.

Après solubilisation du métasilicate, on introduit dans ce milieu, toujours sous agitation (500 tours /minute) et à 20°C, 30 grammes, exprimés en sec, de la composition à tester et on maintient l'agitation (500 tours / minute) pendant 15 minutes à la température susmentionnée de 20°C. Dans le cas où, après ces 15 minutes d'agitation, le milieu n'apparaît pas visuellement homogène (présence de grumeaux notamment), on poursuit ladite agitation jusqu'à ce que le milieu apparaisse visuellement homogène (dispersion totale des grumeaux notamment).

On centrifuge ensuite le milieu ainsi obtenu et ce, pendant 15 minutes à 5000 tours /minute et à température ambiante.

On pèse exactement puis on sèche dans un cristallisoir à 80°C pendant 17 heures dans une étuve ventilée, un aliquote d'environ 10 millilitres du liquide surnageant obtenu après centrifugation. On mesure le poids d'extrait sec ainsi obtenu après séchage et on en déduit ainsi l'indice de solubilité en milieu alcalin ou « indice SMA » de ladite composition, ledit indice correspondant à la quantité d'extrait sec, exprimée en grammes, ramenée à 1 litre de liquide surnageant.

La Société Demanderesse a trouvé, après de nombreux travaux, que cet indice permettait de sélectionner avantageusement toute composition particulièrement bien adaptée aux domaines applicatifs ici envisagés, dès lors notamment que ladite composition se présentait 1) sous forme granulée et 2) présentait une teneur élevée, en l'occurrence d'au moins 40 % en poids (sec/sec), en matière amylacée.

Et il est remarquable de souligner que ledit indice permet de sélectionner des compositions granulées riches en matière amylacée et ce, indépendamment de la nature et de la concentration de tout constituant de ladite matière amylacée.

Par « matière amylacée » au sens de la présente invention, on entend en particulier tout produit choisi parmi les amidons, les dérivés d'amidon, les co-produits de l'extraction de l'amidon et les mélanges quelconques d'au moins deux quelconques de ces produits.

Par « amidons », on entend notamment les amidons natifs, de structure granulaire, d'origine naturelle ou hybride, y compris ceux issus de mutations ou de manipulations génétiques. Ils peuvent notamment être issus de pomme de terre, de blé, de riz, de pois, de maïs, de manioc, y compris de l'ensemble de leurs variétés respectives à hautes teneurs en amylopectine (variétés waxy), à hautes teneurs en amylose ou autres telles que, par exemple, les génotypes dits « blancs » de maïs.

Bien que cela ne soit pas préféré, les amidons natifs peuvent être apportés sous forme de farines ou autres mélanges contenant amidon natif et protéine végétale, le composant « amidon » étant pondéralement majoritaire.

Par « amidons », on entend également des produits résultant d'un traitement chimique, d'un traitement enzymatique, et/ou d'un traitement physique, en particulier thermique, d'un amidon natif, ledit traitement ayant pour effet de conserver ou non la structure granulaire de l'amidon de départ.

Cette définition inclut notamment les amidons de structure granulaire ou non granulaire, réticulés, estérifiés, éthérifiés, oxydés, fluidifiés, prégélatinisés, rétrogradés, résistants aux enzymes, compactés et leurs mélanges. Ces produits présentent ordinairement un dextrose équivalent (DE) inférieur à 0,5.

Par « amidon (de structure) granulaire », on entend tout amidon, natif ou modifié, dont la majorité des grains, i.e. au moins 50 % en nombre et jusqu'à 100 % en nombre, présentent une biréfringence lors d'une observation microscopique sous lumière polarisée. Ces produits présentent avantageusement un indice SMA, tel que mesuré comme décrit précédemment, inférieur à 15 g/l, ledit indice étant au plus égal à 0,8 g/l lorsque l'amidon granulaire est un amidon natif.

Par « dérivés d'amidon », on entend notamment tous les produits de nature polysaccharidique, oligosaccharidique, disaccharidique ou monosaccharide, de structure linéaire, branchée ou cyclique dont l'obtention fait intervenir au moins une étape d'hydrolyse jusqu'à l'obtention d'un DE d'au moins 0,5, de l'ensemble des amidons granulaires ou non granulaires précités. Ces produits peuvent avoir été traités thermiquement, enzymatiquement ou chimiquement, y compris par hydrogénation ou oxydation, antérieurement ou postérieurement à l'étape d'hydrolyse proprement dite.

Les dérivés d'amidon comprennent notamment les hydrolysats d'amidon, en particulier les maltodextrines et sirops de glucose, les cyclodextrines et les dextrines, l'ensemble de ces produits pouvant être ou non modifiés chimiquement mais de préférence étant hydrogénés et/ou oxydés.

Parmi l'ensemble des dérivés d'amidon, on préfère mettre en œuvre ceux présentant un DE final inférieur à 25, de préférence inférieur à 10 et tout particulièrement inférieur à 5.

Par co-produits de l'extraction de l'amidon, on entend les compositions de toutes natures obtenues conjointement à l'amidon lors de toute étape d'extraction de celui-ci de son environnement originel ou non, et en particulier toute composition ainsi obtenue et de nature majoritairement saccharidique telles que les pulpes de pomme de terre, les sons de blé, les drèches de mais, les fibres de pois,

La « matière amylacée » contenue dans la composition granulée conforme à l'invention peut avantageusement être constituée, comme il sera exemplifié par ailleurs, d'au moins deux produits choisis parmi l'ensemble de ceux précités, ces produits pouvant être mis en présence l'un de l'autre au sein de ladite composition granulée à tout moment avant et/ou pendant l'étape proprement dite de granulation. Ces produits peuvent avantageusement être prémélangés avant ladite étape en vue de constituer la matière amylacée devant être contenue à raison d'au moins 40 % (sec/sec) dans la composition granulée finale et devant permettre à celle-ci de présenter un indice SMA tel que sélectionné.

Selon une variante préférentielle, la composition granulée selon l'invention est caractérisée en ce qu'elle présente :

a) un indice SMA compris entre 1,2 et 23 g/l, de préférence compris entre 1,5 et 20 g/l,
b) une teneur en matière amylacée d'au moins 50 % en poids (sec/sec), et
c) un diamètre moyen de ses particules supérieur à 350 microns.

De manière particulièrement avantageuse, cette composition est caractérisée en ce qu'elle présente :

a) un indice SMA compris entre 1,5 et 15 g/l, de préférence compris entre 1,5 et 10 g/l,
b) une teneur en matière amylacée d'au moins 55 %, de préférence d'au moins 60 % en poids (sec/sec), et
c) un diamètre moyen de ses particules compris entre 400 et 1000 microns.

Cette teneur en matière amylacée peut notamment être d'au moins 75 % en poids (sec/sec) et si on le souhaite atteindre 90 %, voire 100 % en poids (sec/sec), ce qui confère à la composition granulée selon l'invention une biodégradabilité très importante, voire totale.

En outre, il est remarquable de souligner que malgré cette possibilité d'une très forte richesse en matière amylacée, la composition granulée conforme à l'invention peut être avantageusement utilisée et ce, pour de nombreuses fonctionnalités et comme vecteur de nombreux principes actifs, dès lors qu'elle présente globalement un indice SMA sélectionné entre 1,0 et 25 g/l, de préférence dans les gammes de valeurs décrites ciavant et notamment entre 1,5 et 10 g/l, i.e dans des gammes représentatives d'une solubilité certes minimale mais quand même limitée en milieu aqueux alcalin.

Selon une autre variante, la composition granulée selon l'invention est caractérisée en ce que la matière amylacée contient un constituant A choisi parmi les amidons granulaires, natifs ou modifiés, les amidons rétrogradés et/ou résistants aux enzymes, les cyclodextrines, les co-produits de l'extraction de l'amidon et en particulier les pulpes de pomme de terre, et les mélanges quelconques d'au moins deux quelconques de ces produits.

La Société Demanderesse a trouvé que ledit constituant A pouvait avantageusement présenter un indice SMA inférieur à 10 g/l, de préférence inférieur à 7 g/l, ledit indice étant mesuré comme décrit précédemment sur 30 g de produit, exprimés en sec.

Selon un autre mode avantageux, le constituant A est choisi parmi les amidons granulaires et les amidons rétrogradés et/ou résistants aux enzymes, de pomme de terre, de blé, de riz, de pois, de maïs blanc ou blanchi et les mélanges quelconques d'au moins deux quelconques de ces produits, de préférence choisi parmi les amidons granulaires natifs de blé, les amidons granulaires estérifiés, les amidons granulaires éthérifiés, en particulier cationiques et/ou carboxyalcoylés, les amidons granulaires réticulés, éventuellement estérifiés ou éthérifiés, et les mélanges quelconques d'au moins deux quelconques de ces produits.

Le constituant A peut avantageusement être constitué d'un mélange entre un amidon granulaire natif, par exemple de blé, et un amidon granulaire réticulé, par exemple une fécule de pomme de terre réticulée et éthérifiée.

Le constituant A peut également consister en un amidon rétrogradé et/ou résistant aux enzymes, notamment résistant aux α-amylases, isoamylasés ou glucoamylases.

Par ailleurs, la composition granulée selon l'invention peut notamment contenir, en particulier en association avec un constituant A tel que décrit ci-avant, un constituant B choisi parmi les amidons non granulaires, les dérivés d'amidon et les mélanges quelconques d'au moins deux quelconques de ces produits, ledit constituant B étant de préférence choisi parmi les amidons non granulaires réticulés, estérifiés et/ou éthérifiés, les amidons prégélatinisés, notamment par extrusion, les amidons hydrolysés, les maltodextrines, les cyclodextrines, les dextrines, les oligosaccharides, les disaccharides, les monosaccharides, les formes (linéaires ou branchées) hydrogénées, oxydées et/ou cationisées de l'ensemble de ces produits et les mélanges quelconques d'au moins deux quelconques de ces produits.

Selon une autre variante, la matière amylacée utilisée conformément à l'invention est caractérisée en ce qu'elle contient un constituant A tel que défini ci-avant et un constituant B choisi parmi les amidons non granulaires, les dérivés d'amidon et les mélanges quelconques d'au moins deux quelconques de ces produits, le ratio pondéral entre ces deux constituants, exprimé en poids sec de constituant A contenu dans ladite matière amylacée sur le poids sec de constituant B contenu dans ladite matière amylacée, étant compris entre 1/1 et 99/1, de préférence compris entre 2/1 et 98/1.

Ledit ratio pondéral est avantageusement compris entre 2,5/1 et 40/1, de préférence compris entre 3/1 et 30/1 comme il sera exemplifié par ailleurs.

En suite de quoi, on dispose d'une nouvelle composition particulièrement bien adaptée aux exigences actuelles tant techniques, économiques que réglementaires.

Outre les avantages plus particulièrement décrits précédemment, cette composition peut notamment présenter des caractéristiques physiques, en particulier de densité et de résistance à l'abrasion, généralement recherchées par l'homme du métier.

Cette composition peut notamment être caractérisée en ce qu'elle présente :

- une densité apparente non tassée au moins égale à 250 g/l, de préférence au moins égale à 300 g/l, et
- un indice d'abrasion au plus égal à 40 %, de préférence au plus égal à 30 %.

La densité apparente non tassée est mesurée classiquement sur matériel HOSOKAWA dénommé « POWDER TESTER » et ce, selon le descriptif décrit dans le document intitulé « POWDER CHARACTERISTICS TESTER - OPERATING - INSTRUCTIONS - HOSOKAWA IRON WORKS, LTD - OSAKA, JAPAN ».

La mesure de l'indice d'abrasion est effectuée à l'aide d'un dispositif de type « Tablet friability /abrasion tester », en l'occurrence à l'aide du modèle commercialisé par ERWEKA sous la dénomination « TA 10 » équipé de son cylindre d'abrasion (« Abrasion Drum »).

Pour cette mesure, la composition granulée à tester est préalablement tamisée sur un dispositif vibrant de type 03/502 commercialisé par FRITSCH® et muni de 4 tamis superposés présentant des mailles carrées dont le côté fait respectivement 1600 (tamis supérieur), 1000, 630 et 200 μm (tamis inférieur).

A t = 0, on verse 400 g de la composition granulée à tester dans le tamis supérieur.

A t = 15', i.e. après 15 minutes de vibrations du dispositif (amplitude de vibration de niveau 7 sur une échelle de 1 à 10), on récupère la fraction granulométrique comprise entre 200 et 630 μm.

15 g de ladite fraction sont alors introduits dans le cylindre d'abrasion (« Abrasion Drum ») du dispositif ERWEKA TA 10. Ledit cylindre est alors mis en rotation pendant 5' (vitesse de rotation de 25 tours/minute).

Après ce laps de temps, on récupère l'intégralité de la composition se trouvant dans ledit cylindre et on retamise cette composition sur le dispositif FRITSCH® précité, dans les mêmes conditions que décrites précédemment si ce n'est que ledit dispositif n'est équipé pour l'occasion que du seul tamis de 200 μm.

On pèse alors le poids de matière retenue sur ledit tamis.

L'indice d'abrasion, exprimé en %, correspond au pourcentage, en poids, de matière non retenue sur ledit tamis.

Plus cet indice est faible et plus la composition granulée testée peut être considérée comme résistante à l'abrasion et inapte à former des fines particules lors des opérations unitaires industrielles.

De manière remarquable, la composition granulée conforme à l'invention peut présenter des caractéristiques de densité et d'indice d'abrasion tout particulièrement recherchées par les industriels de la fabrication des additifs ou des produits finis à usage non alimentaire ou non pharmaceutique et notamment peut être caractérisée en ce qu'elle présente .

- une densité apparente non tassée au moins égale à 350 g/l, de préférence comprise entre 400 et 1000 g/l, et
- un indice d'abrasion au plus égal à 25 %, de préférence compris entre 1 et 20 %.

En outre, la composition granulée selon l'invention présente une densité apparente tassée, mesurée selon le descriptif HOSOKAWA précité, de préférence au moins égale à 450 g/l et plus préférentiellement au moins égale à 500 g/l.

Selon une autre variante, la composition granulée selon l'invention est caractérisée par son degré de blancheur, ce degré pouvant être remarquablement élevé, notamment dans le cas où la matière amylacée utilisée contient une forte proportion, i.e. au moins 50 % en poids (sec/sec) d'un produit choisi parmi les amidons de blé, les amidons de maïs blancs, les amidons de maïs blanchis et les mélanges quelconques d'au moins deux quelconques de ces produits.

La composition granulée selon l'invention peut être caractérisée par le fait qu'elle présente un indice de blancheur STEPHANSEN au moins égal à 60, de préférence au moins égal à 70. Cet indice peut avantageusement être supérieur ou égal à 80.

Il est mesuré classiquement par spectro colorimétrie sur un appareil de type « SPECTRO-SENSOR II » de APPLIED COLOR SYSTEMS, INC permettant d'effectuer des mesures de réflectance aux longueurs d'onde de 430 nm et 670 nm et en utilisant, comme produit étalon, du sulfate de baryum préalablement pastillé dans le moule à poudre spécifiquement prévu à cet effet. Le degré de blancheur STEPHANSEN W du produit à tester, pastillé dans les mêmes conditions que le produit étalon, est donné par la formule :

$$W = 2\ R1 - R2\ \text{où}$$

R1 = valeur de réflectance du produit à 430 nm, et

R2 = valeur de réflectance du produit à 670 nm.

Comme indiqué précédemment, la composition granulée selon l'invention peut avantageusement être constituée majoritairement voire exclusivement d'une matière amylacée et être utilisée, entre autres, comme agent absorbant, agent désintégrant, agent liant, agent adhésif, agent piégeur d'odeurs ou de composés indésirables et/ou support de principe actif, de haute biodégradabilité. Lorsqu'elle est constituée exclusivement d'une matière amylacée, la composition granulée selon l'invention présente avantageusement, avant toute étape de séchage, une matière sèche (MS) supérieure à 58 %, de préférence supérieure à 60 % et plus préférentiellement supérieure à 65 %.

Lorsqu'elle n'est pas composée exclusivement d'une matière amylacée, ladite composition peut notamment être caractérisée en ce qu'elle contient en outre un produit choisi parmi les polymères naturels et synthétiques autres que les amidons et leurs dérivés, tels que, par exemple, les celluloses, les PVP, les polyacrylates ou les PEG, les agents de charge tels que, par exemple, les zéolithes, le carbonate de sodium, l'oxyde de titane ou le silicate de sodium, les builders et co-builders, les agents complexants, les agents tensioactifs, les agents antimousse, les agents anti-redéposition, les agents anti-transfert de couleur, les agents alcalins, les agents oxydants, les agents réducteurs, les colorants, les pigments, les parfums, les agents masquants d'odeur, les azurants optiques, les agents de blanchiment, les activateurs de blanchiment, les agents assouplissants, les agents anti-corrosion, les agents biocides et pesticides, les enzymes, les agents bio-activateurs, les principes actifs phytosanitaires et vétérinaires, les nutriments pour végétaux et les mélanges quelconques d'au moins deux quelconques de ces produits. Ledit produit représente au maximum 60 % en poids (sec/sec) de ladite composition. En pratique, il représentera au maximum 50 %, de préférence au maximum 40 % et généralement au maximum 25 %, en poids (sec/sec) de ladite composition.

Selon un mode également très remarquable de l'invention, la composition granulée est exempte de cellulose modifiée chimiquement et de cellulose microcristalline, à savoir des polymères d'origine naturelle qui sont, dans la pratique industrielle, les plus couramment et abondamment utilisés dans les domaines applicatifs ici envisagés et ce, malgré leur coût.

Ces domaines, bien qu'excluant les produits à usage final alimentaire ou pharmaceutique, sont particulièrement diversifiés et la présente invention concerne en particulier l'utilisation d'une composition granulée telle que décrite précédemment dans ses multiples variantes pour la préparation de compositions, solides ou liquides, à usage dans les domaines de la détergence, du nettoyage, des colles et adhésifs, des peintures, encres, laques et vernis, des matières thermoformables et thermofusibles, du traitement de l'eau et des effluents, du traitement des métaux, de la photographie, des biocides et pesticides, des produits phytosanitaires, des engrais et substances nutritives pour les végétaux, des produits vétérinaires, des liants hydrauliques et plâtres, du textile, des agglomérés combustibles, des noyaux et moules de fonderie, de la papeterie et du carton ondulé.

Cette utilisation peut notamment être envisagée pour la préparation de compositions se présentant sous forme de solutions, dispersions, émulsions, poudres, granules, boulets, noyaux, agglomérats, extrudats, pastilles, comprimés ou tablettes.

Il résulte par ailleurs de ce qui précède que le concept inventif de la présente invention procède également de l'utilisation d'une matière amylacée sélectionnée en vue de la préparation de l'ensemble des compositions précitées et concerne notamment l'utilisation d'une matière amylacée présentant un indice de solubilité en milieu alcalin ou indice SMA compris entre 1,0 et 25 g/l, de préférence compris entre 1,2 et 25 g/l, pour la préparation selon un procédé contenant au moins une étape de granulation par voie humide, de compositions à usage non alimentaire et non pharmaceutique.

Ladite matière amylacée sélectionnée présente de préférence un indice SMA compris entre 1,2 et 23 g/l, de préférence compris entre 1,5 et 20 g/l et encore plus préférentiellement compris entre 1,5 et 15 g/l.

Cet indice peut tout particulièrement être compris entre 1,5 et 10 g/l. Il est mesuré de la même manière que décrit précédemment sur 30 g de composition, exprimés en sec.

Et il est du mérite de la Société Demanderesse d'avoir trouvé que parmi la multitude de matières amylacées potentiellement disponibles sur le marché, les gammes précitées d'indice SMA permettaient de sélectionner efficacement une matière amylacée et ce, donc sans forcément tenir compte en premier lieu de la nature et de la concentration exactes de tout constituant de ladite matière amylacée. Il a notamment été observé que l'utilisation de matières amylacées présentant un indice SMA supérieur à 25 g/l rendait difficile la préparation de granulés par voie humide du fait d'un trop fort pouvoir collant et/ou engendrait entre autres des problèmes de coloration ou d'hygroscopicité trop élevées, de mauvais délitement des granulés ou de mauvaise libération du principe actif. A l'inverse, il a été trouvé que l'utilisation de matières amylacées présentant un indice SMA inférieur à 1 g/l ne permettait pas d'obtenir des granulés présentant une granulométrie et/ou une résistance à l'abrasion suffisantes.

Selon un autre mode également très avantageux de la présente invention, la Société Demanderesse a trouvé qu'il pouvait être particulièrement d'intérêt de sélectionner ladite matière amylacée en lui faisant comporter un produit choisi parmi les amidons de blé, de préférence les amidons de blé granulaires, les cyclodextrines, de préférence les bêta cyclodextrines non modifiées chimiquement, les coproduits de l'extraction de l'amidon, de préférence les pulpes de pomme de terre, et les mélanges quelconques d'au moins deux quelconques de ces produits. Il a notamment été trouvé que l'utilisation d'une matière amylacée présentant un indice SMA compris entre 1,5 et 20 g/l et contenant, par exemple, de 35 à 95 % en poids (sec/sec) d'un amidon de blé natif, était tout particulièrement avantageuse dans le cadre de l'invention.

Il a également été trouvé que l'utilisation d'une matière amylacée présentant un niveau de blancheur élevé, i.e. un indice de blancheur STEPHENSEN au moins égal à 60, de préférence au moins égal à 70, était également avantageux dans le cadre de l'invention, cet indice pouvant atteindre ou dépasser la valeur de 80.

On dispose ainsi d'un nouveau moyen, à savoir d'une composition amylacée sélectionnée selon l'un ou l'autre des critères précités, apte en particulier à être utilisé soit en tant que tel comme agent absorbant, agent désintégrant, agent liant, agent adhésif, agent piégeur d'odeurs ou de composés indésirables et/ou agent support de principe ou soit comme composant de tels agents.

Quelle que soit la variante envisagée en ce qui concerne la composition granulée par voie humide conforme à l'invention, celle-ci est constituée de granules ne présentant pas de structure « en pelure d'oignon » telle qu'obtenue par dragéification selon les enseignements du brevet EP 1 072 612.

La composition selon l'invention se présente avantageusement sous la forme de granules de forme non sphérique (en l'absence de toute étape de sphéronisation), constitués chacun d'une multitude de petites particules individuelles agglomérées entre elles. Par observation microscopique, par exemple au microscope électronique à balayage (« MEB ») à un grossissement de 385 fois, on observe que, au sein d'un même granule, lesdites particules peuvent être de forme variable ou non, y compris de forme ovale ou sphérique, et de taille variable ou non, cette taille se situant généralement entre 1 et 50 microns et notamment entre 2 et 40 microns.

On constate que les contours de ces particules sont bien individualisés et que chaque particule est « collée » au contact d'au moins une autre particule et ce, en un ou plusieurs points.

La présente invention va être décrite de façon encore plus détaillée à l'aide des exemples qui suivent et qui ne sont aucunement limitatifs.

EXEMPLE 1

Dans un mélangeur de type « HOBART A 200 N », on introduit 5 kgs d'une matière amylacée (ci-après «MATIERE A ») dont la teneur en eau est de 12% environ et dont l'indice de solubilité en milieu alcalin (« indice SMA ») a été mesuré à 2,2 g/l selon la méthodologie décrite ci-avant.

Ladite MATIERE A est un mélange physique constitué de 80 % en poids (sec/sec) d'amidon de blé granulaire natif et de 20 % en poids (sec/sec) d'une fécule de pomme de terre granulaire éthérifiée réticulée.

On rajoute dans le mélangeur 1,7 litre d'eau potable et on homogénéise le mélange pendant 15 minutes (agitateur de type « BATTEUR B » - vitesse d'agitation minimale = niveau 1).

' On récupère ensuite 800 g de cette composition humidifiée et homogénéisée que l'on passe directement sur un dispositif « ERWEKA AR 400 » muni d'un granulateur humide de type «FGS» comprenant une grille dont la maille élémentaire est un carré de 1500 $\mu$m de côté. Le passage sur granulateur est effectué à vitesse lente, à savoir en position minimale de la zone intermédiaire des vitesses (zone 2).

Ensuite, on sèche 500 g de la composition granulée et calibrée ainsi obtenue, conforme à l'invention, sur un séchoir-granulateur en lit d'air fluidisé AEROMATIC de laboratoire et ce, jusqu'à ce que l'humidité de la composition résultante soit de 10 $\pm$ 1 %.

La composition granulée, calibrée et séchée, ainsi obtenue (« COMPOSITION A ») conforme à l'invention, présente les caractéristiques suivantes, mesurées ou exprimées comme indiqué précédemment :

- indice SMA : 2,2 g/l,

- teneur en matière amylacée : 100 % (sec/sec),

- diamètre moyen : 4.10 $\mu$m,

- densité apparente non tassée : 420 g/l,

- indice d'abrasion : 10 %,

- indice de blancheur STEPHANSEN : 82

Des tests supplémentaires ont été effectués pour apprécier la vitesse de délitement de tablettes détergentes préparées par incorporation de 5 % en poids (sec/sec) de la COMPOSITION A dans une poudre détergente commercialisée sous l'appellation « SKIP MICRO », homogénéisation du mélange obtenu puis mise en forme dudit mélange sur une presse automatique PERRIER et sous une pression de 1 KN, en vue d'obtenir des tablettes présentant les caractéristiques suivantes : poids : 40 g ; diamètre : 4 cm ; hauteur : 2,5 cm.

On place une tablette ainsi obtenue dans le bac à poudre d'un lave-linge BOSCH de type « TOP 2130 ». Le temps de délitement est mesuré à partir du moment où l'arrivée d'eau est observée au niveau du bac à poudre et ce, jusqu'au délitement complet de la tablette. En cas de délitement non complet à l'arrêt d'arrivée d'eau (i.e. après 180 secondes), on estime le pourcentage de tablette restante, non délitée.

Selon ce test, la composition A granulée conforme à l'invention a permis de préparer des tablettes dont le temps de complet délitement était en moyenne de l'ordre de 50 secondes.

Par ailleurs, on a évalué le temps de délitement de tablettes obtenues et testées dans les mêmes conditions que celles précitées, si ce n'est que lesdites tablettes contiennent, en lieu et place des 5 % en poids (sec/sec) de composition A, 5 % en poids (sec/sec) d'une composition non granulée. Celle-ci est obtenue par simple mélange, sans apport d'eau supplémentaire, de la MATIERE A susdécrite et ce, pendant 15 minutes dans le dispositif « HOBART A 200 N ». Le mélange physique résultant présente notamment un diamètre moyen de ses particules constitutives de 25 μm, significativement inférieure à 200 μm et au diamètre moyen de la COMPOSITION A, granulée (410 μm). La densité apparente non tassée de ce mélange physique est de 570 g/l.

Il apparaît que la MATIERE A ainsi homogénéisée mais non granulée, a permis de préparer des tablettes dont le temps de délitement moyen était très important, à savoir supérieur à 180 secondes et donc très significativement supérieur à celui obtenu avec la COMPOSITION A (50 s). De plus, il a été estimé que 25 % en poids de la tablette ne s'était pas délité au moment de l'arrêt de l'arrivée d'eau dans le bac à poudre.

Le mélange physique non granulé et de faible granulométrie que constitue la MATIERE A n'est donc pas adapté, contrairement à la COMPOSITION A granulée conforme à l'invention, à la préparation de tablettes détergentes devant se déliter dans des délais raisonnables.

EXEMPLE 2

Dans cet exemple, on a introduit dans le mélangeur « HOBART A 200 N », en lieu et place des 5 kgs de MATIERE A, 5 kgs respectivement :

- soit d'un amidon de blé granulaire natif présentant un indice SMA de 0,38 g/l (« MATIERE B »),
- soit d'un mélange présentant un indice SMA de 26,9 g/l (« MATIERE C ») constitué de 20,5 % en poids (sec/sec) d'amidon de blé granulaire natif et 89,5 % en poids sec/sec) de dextrose monohydrate,
- soit d'une dextrine oxydée, atomisée (« MATIERE D ») présentant un indice SMA de 30 g/l,
- soit d'un sirop de glucose oxydé présentant un indice SMA de 30 g/l (« MATIERE E »),
- soit d'un mélange présentant un indice SMA de 2,45 g/l (« MATIERE F ») constitué de 93 % en poids (sec/sec) d'amidon de blé granulaire natif et 7 % en poids (sec/sec) d'une dextrine,
- soit d'un mélange présentant un indice SMA de 22,6 g/l (« MATIERE G ») constitué de 93 % en poids (sec/sec) de bêtacyclodextrine et 7 % en poids (sec/sec) d'une maltodextrine hydrogénée, atomisée.
- soit d'un mélange présentant un indice SMA de 8,4 g/l (« MATIERE H ») constitué de 50 % en poids (sec/sec) d'amidon de blé granulaire natif, 30 % en poids (sec/sec) de pulpes de pomme de terre et 20 % en poids (sec/sec) d'un hydrolysat d'amidon hydrogéné.
- soit d'un mélange présentant un indice SMA de 2,55 g/l (« MATIERE I ») constitué de 88 % en poids (sec/sec) d'amidon de blé granulaire natif, 6 % en poids (sec/sec) de fécule de pomme de terre granulaire, éthérifiée et réticulée et 6 % en poids (sec/sec) d'amidon de maïs waxy réticulé, prégélatinisé par extrusion.

On a introduit ensuite dans le mélangeur la même quantité d'eau potable (1,7 1) qu'à l'EXEMPLE 1 en vue d'essayer de granuler chacune des MATIERES B à I.

Il est apparu que seules les matières F, G, H et I permettaient, en pratique, d'être granulées efficacement.

En effet, la MATIERE B présentant un indice SMA inférieur à 1 g/l ne peut pas être granulée efficacement du fait de son manque de cohésion. La granulométrie moyenne de la composition obtenue n'est que de 80 μm environ et son indice d'abrasion est très élevé, de l'ordre de 95 %.

Par ailleurs, les MATIERES C à E qui présentent un indice SMA supérieur à 25 g/l ne peuvent pas être granulées ou ne peuvent l'être que très difficilement et/ou avec un très faible rendement du fait notamment de leur trop fort pouvoir collant.

Il apparaît donc que seules les matières amylacées sélectionnées conformément à l'invention, à savoir présentant un indice SMA compris entre 1 et 25 g/l, permettent de préparer des compositions granulées répondant véritablement aux exigences actuelles, notamment techniques et économiques.

A titre d'exemple, la MATIERE G précitée a ainsi permis d'obtenir efficacement une composition granulée par voie humide (« COMPOSITION G ») qui présente entre autres :

- un diamètre moyen de 450 μm,
- une densité apparente non tassée de 473 g/l,
- un indice d'abrasion de 24 %,
- un indice de blancheur STEPHANSEN de 75.

Cette COMPOSITION G a permis d'obtenir des tablettes détergentes dont le temps de délitement pouvait être au moins trois fois inférieur à celui de tablettes obtenues avec le simple mélange physique constituant la MATIERE G, de granulométrie moyenne significativement inférieure (35 μm).

En outre, la Société Demanderesse a constaté que la COMPOSITION G pouvait, en tant que telle, être utilisée avantageusement comme agent piégeur d'odeur utilisable dans une poudre ou une tablette détergente ou comme support de principes actifs tels que des parfums, enzymes, colorants ou autres.

De plus, il a été vérifié que ces principes actifs pouvaient être incorporés à ladite COMPOSITION G avant et/ou pendant l'étape proprement dite de granulation humide.

EXEMPLE 3

Dans cet exemple, on a introduit dans le mélangeur « HOBART A 200 N » 5 kgs d'un mélange physique constitué de :

- 86 % en poids (sec/sec) de la MATIERE F décrite précédemment dont le diamètre moyen est de 22 μm environ, et,
- 14 % en poids (sec/sec) d'un principe actif hydrophobe constitué d'un parfum à base d'huiles essentielles.

Ce mélange a été granulé en présence d'eau et ce, sans difficulté particulière et avec un rendement quasi total. Il a ensuite été calibré et séché dans les mêmes conditions que celles décrites à l'EXEMPLE 1.

La composition granulée résultante (« COMPOSITION F1 »), conforme à l'invention, présente les caractéristiques suivantes :

- teneur en matière amylacée : 86 %
- indice SMA : 2,1 g/l
- diamètre moyen : 260 μm,
- densité apparente non tassée : 6.00 g/l
- indice d'abrasion : 35 %
- indice de blancheur STEPHANSEN : 76

La Société Demanderesse a observé, d'une part, que cette COMPOSITION F1 présentait un caractère non-mottant et permettait, en tant que telle, une libération rapide et régulière du parfum qu'elle contenait et que, d'autre part, de tels avantages ne pouvaient être obtenus en y substituant, poids pour poids, la MATIERE F par la MATIERE B précitée, constituée uniquement d'amidon de blé natif et présentant un indice SMA de 0,38 g/l.

Les EXEMPLES précédents montrent que des compositions selon l'invention telles que par exemple les COMPOSITIONS F et G peuvent présenter plusieurs fonctionnalités et notamment:

- se comporter comme un bon agent de délitement de tablettes tout en constituant un bon support de parfum apte à le libérer rapidement et régulièrement (COMPOSITION F), ou
- se comporter comme un bon agent de délitement de tablettes tout en constituant un bon agent piégeur d'odeur ou encore un bon support de principe actif (COMPOSITION G).

La Société Demanderesse a par ailleurs constaté que les compositions selon l'invention pouvaient également jouer à la fois les fonctions de :

- bon agent de délitement de tablettes et bon support d'antimousse apte à le libérer de façon contrôlée lors de son usage, notamment en détergence ou dans des milieux de fermentation,
- bon agent de délitement de tablettes et bon support d'agent phytosanitaire, d'agent biocide ou d'agent complexant., apte à libérer lesdits agents de façon contrôlée.

**Revendications**

1. Composition granulée par voie humide à une température entre 15 et 35°C pour préparation de produits à usage non alimentaire et non pharmaceutique, **caractérisée en ce qu'**elle présente :

    a) un indice de solubilité en milieu alcalin ou indice SMA, compris entre 1,0 et 25 g/l, de préférence compris entre 1,2 et 25 g/l,
    b) une teneur en matière amylacée d'au moins 40 % exprimée en poids sec de matière amylacée par rapport au poids sec de ladite composition, et
    c) un diamètre moyen de ses particules supérieur à 200 microns, de préférence supérieur à 250 microns.

2. Composition granulée selon la revendication 1, **caractérisée en ce qu'**elle présente:

    a) un indice SMA compris entre 1,2 et 23 g/l, de préférence compris entre 1,5 et 20 g/l,

b) une teneur en matière amylacée d'au moins 50 % en poids (sec/sec), et

c) un diamètre moyen de ses particules supérieur à 350 microns.

3. Composition granulée selon la revendication 2, **caractérisée en ce qu'**elle présente :

a) un indice SMA compris entre 1,5 et 15 g/l, de préférence compris entre 1,5 et 10 g/l,

b) une teneur en matière amylacée d'au moins 55 %, de préférence d'au moins 60 % en poids (sec/sec), et

c) un diamètre moyen de ses particules compris entre 400 et 1000 microns.

4. Composition granulée selon l'une quelconque des revendications 1 à 3, **caractérisée en ce que** la matière amylacée contient un constituant A choisi parmi les amidons granulaires, natifs ou modifiés, les amidons rétrogradés et/ou résistants aux enzymes, les cyclodextrines, les co-produits de l'extraction de l'amidon et en particulier les pulpes de pomme de terre, ledit milieu alcalin de pH de 11 environ, étant préparé par introduction sous agitation de 0, 1 % en poids de métasilicate de sodium pentahydrate dans 1 litre d'eau déminéralisée maintenu à 20°C jusqu'à solubilisation du métasilicate, 30 grammes exprimés en sec de ladite composition étant introduits dans ledit milieu et soumis à une agitation à 500 tours/minute et à 20°C jusqu'à ce que ledit milieu apparaisse visuellement homogène, ledit milieu ainsi obtenu étant centrifugé pendant 15 minutes à 5 000 tours/minute à température ambiante, un aliquote d'environ 10 millilitres du liquide surnageant étant séché dans un cristallisoir à 80°C pendant 17 heures dans une étuve ventilée puis pesé, l'indice de solubilité en milieu alcalin ou « indice SMA » correspondant à la quantité d'extrait sec, exprimée en grammes, ramenée à 1 litre de liquide surnageant, et les mélanges quelconques d'au moins deux quelconques de ces produits.

5. Composition granulée selon la revendication 4, **caractérisée en ce que** le constituant A présente un indice de solubilité en milieu alcalin ou indice SMA inférieur à 10 g/l, de préférence inférieur à 7 g/l.

6. Composition granulée selon l'une quelconque des revendications 4 ou 5, **caractérisée en ce que** le constituant A est choisi parmi les amidons granulaires et les amidons rétrogradés et/ou résistants aux enzymes, de pomme de terre, de blé, de riz, de pois, de maïs blanc ou blanchi et les mélanges quelconques d'au moins deux quelconques de ces produits, de préférence choisi parmi les amidons granulaires natifs de blé, les amidons granulaires estérifiés, les amidons granulaires éthérifiés, en particulier cationiques et/ou carboxyalcoylés, les amidons granulaires réticulés, éventuellement estérifiés ou éthérifiés, et les mélanges quelconques d'au moins deux quelconques de ces produits.

7. Composition granulée selon l'une quelconque des revendications 1 à 6, **caractérisée en ce que** la matière amylacée contient un constituant B choisi parmi les amidons non granulaires, les dérivés d'amidon et les mélanges quelconques d'au moins deux quelconques de ces produits.

8. Composition granulée selon la revendication 7, **caractérisée en ce que** le constituant B est choisi parmi les amidons non granulaires réticulés, estérifiés et/ou éthérifiés, les amidons prégélatinisés, les amidons hydrolysés, les maltodextrines, les cyclodextrines, les dextrines, les oligosaccharides, les disaccharides, les monosaccharides, les formes, linéaires ou branchées, hydrogénées, oxydées et/ou cationisées de l'ensemble de ces produits et les mélanges quelconques d'au moins deux quelconques de ces produits.

9. Composition selon l'une des revendications 4 à 6, **caractérisée en ce que** la matière amylacée contient un constituant A et un constituant B choisi parmi les amidons non granulaires, les dérivés d'amidon et les mélanges quelconques d'au moins deux quelconques de ces produits, le ratio pondéral entre ces deux constituants, exprimé en poids sec de constituant A contenu dans ladite matière amylacée sur le poids sec de constituant B contenu dans ladite matière amylacée, étant compris entre 1/1 et 99/1, de préférence compris entre 2/1 et 98/1.

10. Composition granulée selon la revendication 9, **caractérisée en ce que** le ratio pondéral entre le constituant A et le constituant B, est compris entre 2,5/1 et 40/1, de préférence compris entre 3/1 et 30/1.

11. Composition granulée selon l'une quelconque des revendications 4 à 10, **caractérisée en ce que** le composant A contient un amidon granulaire natif et un amidon réticulé et éthérifié.

12. Composition granulée selon l'une quelconque des revendications 1 à 11, **caractérisée en ce qu'**elle présente :

- une densité apparente non tassée au moins égale à 250 g/l, de préférence au moins égale à 300 g/l, et

- un indice d'abrasion au plus égal à 40 %, de préférence au plus égal à 30 %.

13. Composition granulée selon la revendication 12, **caractérisée en ce qu'**elle présente :

- une densité apparente non tassée au moins égale à 350 g/l, de préférence comprise entre 400 et 1000 g/l, et

- un indice d'abrasion au plus égal à 25 %, de préférence compris entre 1 et 20 %.

14. Composition granulée selon l'une des revendications 1 à 13, **caractérisée en ce qu'**elle contient en outre un produit choisi parmi les polymères naturels et synthétiques autres que les amidons et leurs dérivés, les agents de charge, les builders et co-builders, les agents complexants, les agents tensioactifs, les agents antimousse, les agents anti-redéposition, les agents anti-transfert de couleur, les agents alcalins, les agents oxydants, les agents réducteurs, les colorants, les pigments, les parfums, les agents masquants d'odeur, les azurants optiques, les agents de blanchiment, les activateurs de blanchiment, les agents assouplissants, les agents anti-corrosion, les agents biocides et pesticides, les enzymes, les agents bio-activateurs, les principes actifs phytosanitaires et vétérinaires, les nutriments pour végétaux et les mélanges quelconques d'au moins deux quelconques de ces produits.

15. Composition granulée selon l'une des revendications 1 à 14, **caractérisée en ce qu'**elle est exempte de cellulose modifiée chimiquement ou de cellulose microcristalline.

16. Composition selon l'une quelconque des revendications 1 à 15, cractérisée en ce qu'elle se présente sous forme de granules de forme non sphérique, constitués de particules agglomérées entre elles, lesdites particules présentant une taille comprise entre 1 et 50 microns.

17. Utilisation d'une composition granulée selon l'une quelconque des revendications 1 à 16 pour la préparation de compositions, solides ou liquides, à usage dans les domaines de la détergence, du nettoyage, des colles et adhésifs, des peintures, encres, laques et vernis, des matières thermoformables et thermofusibles, du traitement de l'eau et des effluents, du traitement des métaux, de la photographie, des biocides et pesticides, des produits phytosanitaires, des engrais et substances nutritives pour les végétaux, des produits vétérinaires, des liants hydrauliques et plâtres, du textile, des agglomérés combustibles, des noyaux et moules de fonderie, de la papeterie et du carton ondulé.

18. Utilisation selon la revendication 17 pour la préparation de compositions se présentant sous forme de solutions, dispersions, émulsions, poudres, granules, boulets, noyaux, agglomérats, extrudats, pastilles, comprimés ou tablettes.

19. Utilisation d'une matière amylacée présentant un indice de solubilité en milieu alcalin ou indice SMA compris entre 1,0 et 25 g/l, de préférence compris entre 1,2 et 25 g/l, pour la préparation selon un procédé contenant au moins une étape de granulation par voie humide, de compositions à usage non alimentaire et non pharmaceutique.

20. Utilisation selon la revendication 19, **caractérisée en ce que** la matière amylacée présente un indice SMA compris entre 1,2 et 23 g/l, de préférence compris entre 1,5 et 20 g/l et encore plus préférentiellement compris entre 1,5 et 15 g/l.

21. Utilisation selon l'une quelconque des revendications 19 ou 20, **caractérisée en ce que** la matière amylacée contient un produit choisi parmi les amidons de blé, de préférence les amidons de blé granulaires, les cyclodextrines, de préférence les bêta cyclodextrines non modifiées chimiquement, les co-produits de l'extraction de l'amidon, de préférence les pulpes de pomme de terre, et les mélanges quelconques d'au moins deux quelconques de ces produits.

22. Utilisation selon l'une quelconque des revendications 19 à 21, **caractérisée en ce que** la matière amylacée est utilisée comme agent absorbant, agent désintégrant, agent liant, agent adhésif, agent piégeur d'odeurs ou de composés indésirables et/ou agent support de principe actif ou comme composant de tels agents.

## Patentansprüche

1. Bei einer Temperatur zwischen 15 und 35°C feuchtgranulierte Zusammensetzung zur Herstellung von Produkten zur Verwendung im nicht Lebensmittel- und nicht pharmazeutischen Bereich, **dadurch gekennzeichnet, dass** diese aufweist:

a) einen Lösungsindex in alkalischem Medium oder SMA-Index zwischen 1,0 und 25 g/l, vorzugsweise zwischen 1,2 und 25 g/l, wobei das alkalische Medium einen pH-Wert von etwa 11 aufweist und durch Zugabe von 0,1 Gew.-% Natriummetasilikatpentahydrat unter Rühren zu 1 Liter enthärtetem Wasser, das bei 20°C gehalten wird bis zur Auflösung des Metasilikats, hergestellt wird, wobei 30 Gramm, ausgedrückt als Trockengehalt, der Zusammensetzung in das Medium gegeben werden und bei 500 Umdrehungen/Minute und 20°C gerührt werden, bis das Medium bei Betrachtung homogen erscheint, das so erhaltene Medium während 15 Minuten bei 5000 Umdrehungen/Minute bei Raumtemperatur zentrifugiert wird, ein Aliquot von etwa 10 Millilitern der überstehenden Flüssigkeit in einer Kristallisierschale bei 80°C während 17 Stunden in einem belüfteten Trockenschrank getrocknet und dann gewogen wird, wobei der Lösungsindex in alkalischem Medium oder "SMA-Index" der Menge an trockenem Extrakt in Gramm entspricht, die auf 1 Liter der überstehenden Flüssigkeit zurückgeführt wird,
b) einen Gehalt an stärkeartiger Substanz von mindestens 40%, ausgedrückt als Trockengewicht der stärkeartigen Substanz bezogen auf das Trockengewicht der Zusammensetzung, und
c) einen mittleren Durchmesser ihrer Teilchen von größer als 200 Mikron, vorzugsweise von größer als 250 Mikron.

2. Granulierte Zusammensetzung nach Anspruch 1, **dadurch gekennzeichnet, dass** diese aufweist:

a) einen SMA-Index zwischen 1,2 und 23 g/l, vorzugsweise zwischen 1,5 und 20 g/l,
b) einen Gehalt an stärkeartiger Substanz von mindestens 50 Gew.-% (trocken/trocken), und
c) einen mittleren Durchmesser ihrer Teilchen von größer als 350 Mikron.

3. Granulierte Zusammensetzung nach Anspruch 2, **dadurch gekennzeichnet, dass** diese aufweist:

a) einen SMA-Index zwischen 1,5 und 15 g/l, vorzugsweise zwischen 1,5 und 10 g/l,
b) einen Gehalt an stärkeartiger Substanz von mindestens 55 Gew.-%, vorzugsweise von mindestens 60 Gew.-% (trocken/trocken), und
c) einen mittleren Durchmesser ihrer Teilchen von zwischen 400 und 1000 Mikron.

4. Granulierte Zusammensetzung nach einem der Ansprüche 1 bis 3, **dadurch gekennzeichnet, dass** die stärkeartige Substanz einen Bestandteil A enthält, der aus granulierten natürlichen oder modifizierten Stärken, retrogradierten und/oder enzymresistenten Stärken, Cyclodextrinen, Stärkeextraktions-Coprodukten und insbesondere Kartoffelpulpen und beliebigen Gemischen von mindestens zwei beliebigen dieser Produkte ausgewählt ist.

5. Granulierte Zusammensetzung nach Anspruch 4, **dadurch gekennzeichnet, dass** der Bestandteil A einen Lösungsindex in alkalischem Medium oder SMA-Index von weniger als 10 g/l, vorzugsweise von weniger als 7 g/l, aufweist.

6. Granulierte Zusammensetzung nach einem der Ansprüche 4 oder 5, **dadurch gekennzeichnet, dass** der Bestandteil A aus granulierten Stärken und retrogradierten und/oder enzymresistenten Stärken, Kartoffel-, Weizen-, Reis-, Erbsenstärken, Stärken aus weißem oder blanchiertem Mais und beliebigen Gemischen von mindestens zwei beliebigen dieser Produkte ausgewählt ist, vorzugsweise aus natürlichen granulierten Weizenstärken, veresterten granulierten Stärken, veretherten granulierten Stärken, insbesondere kationischen und/oder carboxyalkylierten, vemetzten granulierten Stärken, gegebenenfalls verestert oder verethert, und beliebigen Gemischen von mindestens zwei beliebigen dieser Produkte ausgewählt ist.

7. Granulierte Zusammensetzung nach einem der Ansprüche 1 bis 6, **dadurch gekennzeichnet, dass** die stärkeartige Substanz einen Bestandteil B enthält, der aus nicht granulierten Stärken, Stärkederivaten und beliebigen Gemischen von mindestens zwei beliebigen dieser Produkte ausgewählt ist.

8. Granulierte Zusammensetzung nach Anspruch 7, **dadurch gekennzeichnet, dass** der Bestandteil B ausgewählt ist aus vernetzter nicht granulierten Stärken, verestert und/oder verethert, prägelatinierten Stärken, hydrolysierten Stärken, Maltodextrinen, Cyclodextrinen, Dextrinen, Oligosacchariden, Disacchariden, Monosacchariden, linearen oder verzweigten, hydrierten, oxygenierten und/oder kationisierten Formen all dieser Produkte und beliebigen Gemischen von mindestens zwei beliebigen dieser Produkte.

9. Zusammensetzung nach einem der Ansprüche 4 bis 6, **dadurch gekennzeichnet, dass** die stärkeartige Substanz einen Bestandteil A und einen Bestandteil B enthält, ausgewählt aus nicht granulierten Stärken, Stärkederivaten und beliebigen Gemischen von mindestens zwei beliebigen dieser Produkte, wobei das Gewichtsverhältnis zwischen den beiden Bestandteilen, ausgedrückt in Trockengewicht des Bestandteils A, der in der stärkeartigen Substanz enthalten ist, zu Trockengewicht des Bestandteils B, der in der stärkeartigen Substanz enthalten ist, zwischen 1/1 und 99/1, vorzugsweise zwischen 2/1 und 98/1, liegt.

10. Granulierte Zusammensetzung nach Anspruch 9, **dadurch gekennzeichnet, dass** das Gewichtsverhältnis zwischen Bestandteil A und Bestandteil B zwischen 2,5/1 und 40/1, vorzugsweise zwischen 3/1 und 30/1, liegt.

11. Granulierte Zusammensetzung nach einem der Ansprüche 4 bis 10, **dadurch gekennzeichnet, dass** der Bestandteil A eine natürliche granulierte Stärke und eine vernetzte und veretherte Stärke enthält.

12. Granulierte Zusammensetzung nach einem der Ansprüche 1 bis 11, **dadurch gekennzeichnet, dass** diese aufweist:

- eine unkomprimierte Schüttdichte von mindestens 250 g/l, vorzugsweise von mindestens 300 g/l, und
- einen Abriebsindex von höchstens 40%, vorzugsweise von höchstens 30%.

13. Granulierte Zusammensetzung nach Anspruch 12, **dadurch gekennzeichnet, dass** diese aufweist:

- eine unkomprimierte Schüttdichte von mindestens 350 g/l, vorzugsweise von zwischen 400 und 1000 g/l, und
- einen Abriebsindex von höchstens 25%, vorzugsweise von zwischen 1 und 20%.

14. Granulierte Zusammensetzung nach einem der Ansprüche 1 bis 13, **dadurch gekennzeichnet, dass** diese ferner ein Produkt enthält, ausgewählt aus natürlichen und synthetischen Polymeren, die keine Stärken oder Derivate davon sind, Füllmitteln, Buildern und Co-Buildern, Komplexierungsmitteln, oberflächenaktiven Mitteln, Antischaummitteln, Vergrauungsinhibitoren, Farbübertragungsinhibitoren, alkalischen Mitteln, Oxidationsmitteln, Reduktionsmitteln, Farbstoffen, Pigmenten, Parfums, Geruchsverdeckern, optischen Aufhellern, Bleichmitteln, Bleichaktivierern, Weichspülern, Korrosionsschutzmitteln, Bioziden und Pestiziden, Enzymen, Bioaktivatoren, Pflanzenschutz- und Tierschutzmitteln, Nährstoffen für Pflanzen und beliebigen Gemischen von mindestens zwei beliebigen dieser Produkte.

15. Granulierte Zusammensetzung nach einem der Ansprüche 1 bis 14, **dadurch gekennzeichnet, dass** diese frei von chemisch modifizierter Zellulose oder mikrokristalliner Zellulose ist.

16. Granulierte Zusammensetzung nach einem der Ansprüche 1 bis 15, **dadurch gekennzeichnet, dass** diese in Form von nicht kugelförmigen Körnchen vorliegt, die aus miteinander agglomerierten Teilchen bestehen, wobei die Teilchen eine Größe zwischen 1 und 50 Mikron aufweisen.

17. Verwendung einer granulierten Zusammensetzung nach einem der Ansprüche 1 bis 16 zur Herstellung von festen oder flüssigen Zusammensetzungen zur Verwendung auf dem Gebiet des Waschens, des Putzens, der Klebstoffe und Haftstoffe, der Farben, Tinten, Lacke und Firnisse, der wärmeformbaren und wärmeschmelzbaren Materialien, der Behandlung von Wasser und Abwässern, der Behandlung von Metallen, der Fotografie, der Biozide und Pestizide, der Pflanzenschutzmittel, der Dünger und Pflanzennährstoffe, der Veterinärprodukte, der hydraulischen und Gipsbindemittel, der Textilien, Brennstoffbriketts, der Gießkerne und Gussformen, der Papierwaren und Wellpappe.

18. Verwendung nach Anspruch 17 zur Herstellung von Zusammensetzungen in Form von Lösungen, Dispersionen, Emulsionen, Pulvern, Granulaten, Kugeln, Kernen, Agglomeraten, Extrudaten, Pastillen, Tabletten oder Lutschpastillen.

19. Verwendung einer stärkeartigen Substanz, die einen Lösungsindex in alkalischem Medium oder SMA-Index zwischen 1,0 und 25 g/l, vorzugsweise zwischen 1,2 und 25 g/l, aufweist, zur Herstellung gemäß einem Verfahren, das mindestens einen Feuchtgranulationsschritt umfasst, von Zusammensetzungen zur Verwendung im nicht Lebensmittel- und nicht pharmazeutischen Bereich.

20. Verwendung nach Anspruch 19, **dadurch gekennzeichnet, dass** die stärkeartige Substanz einen SMA-Index zwischen 1,2 und g/l, vorzugsweise zwischen 1,5 und 20 g/l und am stärksten bevorzugt zwischen 1,5 und 15 g/l, aufweist.

21. Verwendung nach einem der Ansprüche 19 oder 20, **dadurch gekennzeichnet, dass** die stärkeartige Substanz ein Produkt enthält, das aus Weizenstärken, vorzugsweise granulierten Weizenstärken, Cyclodextrinen, vorzugsweise nicht chemisch modifizierten Beta-Cyclodextrinen, Stärkeextraktions-Coprodukten, vorzugsweise Kartoffelpulpen, und beliebigen Gemischen von mindestens zwei beliebigen dieser Produkte ausgewählt ist.

22. Verwendung nach einem der Ansprüche 19 bis 21, **dadurch gekennzeichnet, dass** die stärkeartige Substanz als Absorptionsmittel, Sprengmittel, Bindemittel, Haftmittel, Bindemittel für Gerüche oder unerwünschte Verbindungen und/oder Wirkstoffträger oder als Bestandteil solcher Mittel verwendet wird.

## Claims

1. Composition that is wet granulated at a temperature between 15 and 35°C for the preparation of products for non-dietary and non-pharmaceutical use, **characterized in that** it has:

a) an alkaline medium solubility value, or AMS value, of between 1.0 and 25 g/1, preferably of between 1.2 and 25 g/1, the said alkaline medium with a pH of about 11 being prepared by introducing, with stirring, 0.1% by weight of sodium metasilicate pentahydrate into 1 litre of demineralized water kept at 20°C until solubilization of the metasilicate, 30 grams, expressed on a dry basis, of the said composition being introduced into the said medium and subjected to stirring at 500 revolutions/minute and at 20°C until the said medium appears visually homogeneous, the said medium thus obtained being centrifuged for 15 minutes at 5000 revolutions/minute at room temperature, an aliquot of about 10 millilitres of the supernatant liquid being dried in a crystallizing vessel at 80°C for 17 hours in a ventilated oven and then dried, the alkaline medium solubility value or "AMS value" corresponding to the quantity of dry extract, expressed in grams, per 1 litre of supernatant liquid,

b) a starchy material content of at least 40% expressed as dry weight of starchy material relative to the dry weight of the said composition, and

c) a mean diameter of its particles greater than 200 microns, preferably greater than 250 microns.

2. Granulated composition according to Claim 1, **characterized in that** it has:

   a) an AMS value of between 1.2 and 23 g/l, preferably of between 1.5 and 20 g/l,
   b) a starchy material content of at least 50% by weight (dry/dry), and
   c) a mean diameter of its particles greater than 350 microns.

3. Granulated composition according to Claim 2, **characterized in that** it has:

   a) an AMS value of between 1.5 and 15 g/l, preferably of between 1.5 and 10 g/l,
   b) a starchy material content of at least 55%, preferably of at least 60% by weight (dry/dry), and
   c) a mean diameter of its particles of between 400 and 1000 microns.

4. Granulated composition according to any one of Claims 1 to 3, **characterized in that** the starchy material contains a constituent A chosen from native or modified granular starches, retrograded and/or enzyme-resistant starches, cyclodextrins, coproducts of starch extraction and in particular potato pulps, and any mixtures of at least any two of these products.

5. Granulated composition according to Claim 4, **characterized in that** the constituent A has an alkaline medium solubility value or AMS value of less than 10 g/l, preferably of less than 7 g/l.

6. Granulated composition according to either of Claims 4 and 5, **characterized in that** the constituent A is chosen from granular starches and retrograded and/or enzyme-resistant starches, from potato, wheat, rice, pea, white or bleached maize and any mixtures of at least any two of these products, preferably chosen from wheat native granular starches, esterified granular starches, etherified granular starches, which are in particular cationic and/or carboxyalkylated, optionally esterified or etherified, crosslinked granular starches, and any mixtures of at least any two of these products.

7. Granulated composition according to any one of Claims 1 to 6, **characterized in that** the starchy material contains a constituent B chosen from non-granular starches, starch derivatives and any mixtures of at least any two of these products.

8. Granulated composition according to Claim 7, **characterized in that** the constituent B is chosen from esterified and/or etherified, crosslinked non-granular starches, pregelatinized starches, hydrolysed starches, maltodextrins, cyclodextrins, dextrins, oligosaccharides, disaccharides, monosaccharides, the hydrogenated, oxidized and/or cationized, linear or branched forms of all these products and any mixtures of at least any two of these products.

9. Composition according to one of Claims 4 to 6, **characterized in that** the starchy material contains a constituent A and a constituent B chosen from non-granular starches, starch derivatives and any mixtures of at least any two of these products, the weight ratio between these two constituents, expressed as dry weight of constituent A contained in the said starchy material over the dry weight of constituent B contained in the said starchy material, being between 1/1 and 99/1, preferably between 2/1 and 98/1.

10. Granulated composition according to Claim 9, **characterized in that** the weight ratio between the constituent A and the constituent B is between 2.5/1 and 40/1, preferably between 3/1 and 30/1.

11. Granulated composition according to any one of Claims 4 to 10, **characterized in that** the component A contains a native granular starch and a crosslinked and etherified starch.

12. Granulated composition according to any one of Claims 1 to 11, **characterized in that** it has:

    - a non-compacted apparent density at least equal to 250 g/l, preferably at least equal to 300 g/l, and
    - an abrasion value at most equal to 40%, preferably at most equal to 30%.

13. Granulated composition according to Claim 12, **characterized in that** it has:

- a non-compacted apparent density at least equal to 350 g/l, preferably of between 400 and 1000 g/l, and
- an abrasion value at most equal to 25%, preferably of between 1 and 20%.

14. Granulated composition according to one of Claims 1 to 13, **characterized in that** it additionally contains a product chosen from natural and synthetic polymers other than starches and their derivatives, fillers, builders and cobuilders, complexing agents, surfactants, antifoams, antiredeposition agents, anticolour transfer agents, alkaline agents, oxidizing agents, reducing agents, colorants, pigments, perfumes, odour-masking agents, optical brighteners, bleaching agents, bleaching activators, softeners, anti-corrosion agents, biocidal and pesticidal agents, enzymes, bioactivators, plant-protection and veterinary active ingredients, nutrients for plants and any mixtures of at least any two of these products.

15. Granulated composition according to one of Claims 1 to 14, **characterized in that** it is free of chemically modified cellulose or of microcrystalline cellulose.

16. Composition according to any one of Claims 1 to 15, **characterized in that** it is provided in the form of granules of non-spherical shape, consisting of agglomerated particles, the said particles having a size of between 1 and 50 microns.

17. Use of a granulated composition according to any one of Claims 1 to 16 for the preparation of solid or liquid compositions for use in the fields of detergents, cleaning, glues and adhesives, paints, inks, lacquers and varnishes, thermoformable and hotmelt materials, water and effluent treatment, metal treatment, photography, biocides and pesticides, plant-protection products, fertilizers and nutritive substances for plants, veterinary products, hydraulic binders and plasters, textile, compressed fuel, foundry cores and moulds, papermaking and corrugated cardboard.

18. Use according to Claim 17, for the preparation of compositions provided in the form of solutions, dispersions, emulsions, powders, granules, balls, cores, agglomerates, extrudates, pellets, tablets or lozenges.

19. Use of a starchy material having an alkaline medium solubility value or AMS value of between 1.0 and 25 g/l, preferably between 1.2 and 25 g/l, for the preparation, according to a process containing at least one wet granulation step, of compositions for non-dietary and non-pharmaceutical use.

20. Use according to Claim 19, **characterized in that** the starchy material has an AMS value of between 1.2 and 23 g/l, preferably of between 1.5 and 20 g/l and more preferably still of between 1.5 and 15 g/l.

21. Use according to either of Claims 19 and 20, **characterized in that** the starchy material contains a product chosen from wheat starches, preferably granular wheat starches, cyclodextrins, preferably non-chemically modified beta-cyclodextrins, coproducts of the extraction of starch, preferably potato pulps, and any mixtures of at least any two of these products.

22. Use according to any one of Claims 19 to 21, **characterized in that** the starchy material is used as absorbent, disintegrating agent, binder, adhesive, agent for trapping odours or undesirable compounds and/or agent for carrying an active ingredient or as component of such agents.